# EUROPÄISCHE PATENTSCHRIFT

(11) **EP 1 155 925 B1**
(45) Veröffentlichungstag und Bekanntmachung des Hinweises auf die Patenterteilung: **26.04.2006**
(21) Anmeldenummer: 01111921.1
(22) Anmeldetag: 18.05.2001
(51) Int. Cl.: B60R 21/16, B60R 21/20

(54) **Gassack-Rückhalteeinrichtung mit Einbuchtung und einer Vorderwand deren Zentrumsabschnitt am Modul bleibend befestigt ist**
Airbag retaining device with a recess and a front wall whose central section is permanently attached to the module
Coussin gonflable de sécurité à renfoncement, dont la partie avant présente une portion centrale fixée à demeure sur le module

(30) Priorität: 19.05.2000 DE 20008916 U; 16.06.2000 DE 20010726 U; 13.07.2000 DE 20012077 U; 28.12.2000 DE 10065463
(43) Veröffentlichungstag der Anmeldung: 21.11.2001
(73) Patentinhaber: TRW Automotive Safety Systems GmbH, 63743 Aschaffenburg (DE)
(72) Erfinder: Frisch, Ralph, 63776 Mömbris (DE)
(74) Vertreter: Kitzhofer, Thomas

(56) Entgegenhaltungen:
- WO-A1-97/34783
- DE-A1- 19 749 914
- DE-A1- 19 816 080
- DE-U1- 29 921 744
- US-A- 3 727 942
- US-A- 6 042 147

## Beschreibung

Die Erfindung betrifft eine Gassack-Rückhalteeinrichtung nach dem Oberbegriff des Anspruchs 1.

Eine Gassack-Rückhalteeinrichtung ist aus der DE 197 49 914 A1 bekannt. Der dabei verwendete Gassack hat im aufgeblasenen Zustand eine ringförmige, mit Gas zu befüllende Kammer. Der Zentrumsabschnitt ist entweder direkt am Gasgenerator oder, wenn über die Lenksäule Gas eingeblasen wird, über eine Hülse am Modul bleibend befestigt, d.h. er ist auch nach dem Entfalten noch am Modul befestigt.

Die US 6,042,147, die als nächstliegender Stand der Technik angegeben wird, zeigt eine Airbageinrichtung mit einem Gassack, der im aufgeblasenen Zustand eine Vertiefung aufweist, da ein Teil des Gassacks mittels eines Befestigers an einem Halter befestigt ist. Eine Abdeckung, die den Airbag überzieht, weist eine Reißlinie auf, wobei die Abdeckung, wenn der Airbag aufgeblasen wird, entlang der Reißlinie geöffnet wird.

Aus der DE 198 16 080 ist ein Mehrkammerairbag in der Art eines Trichterairbags bekannt. Dieser Mehrkammerairbag weist wenigstens einen Trichterfreiraum auf, der sich nach innen bis zum Abdeckungsbereich erstreckt und dadurch gebildet ist, daß ein Wandbereich des Airbags am Trichterboden fest mit der Abdeckung des Airbags verbunden ist.

Die Erfindung schafft eine Gassack-Rückhalteeinrichtung, bei der das Gasgeneratorgehäuse geringeren mechanischen Belastungen als im Stand der Technik und bei dem der Gassack niedrigeren thermischen Belastungen unterworfen ist als beim Stand der Technik. Dies wird durch eine Gassack-Rückbalteeinrichtung nach Anspruch 1 erreicht.

Die Befestigung des schweren Metallemblems hat damit eine Doppelfunktion, indem sie einerseits der Rückhaltung des Emblems und andererseits auch der Rückhaltung des Zentrumsabschnitts dient. Das Metallemblem kann auch einen Abschnitt der Modulabdeckung, unmittelbar unterhalb des Emblems liegend, beim Öffnen der Modulabdeckung an einer Verschwenkung hindern, so daß bei dieser Ausführungsform der Zentrumsabschnitt zwischen dem Halteteil und der Unterseite der Modulabdeckung geklemmt ist.

Das Metallemblem weist bevorzugt einen Gewindestift auf, der durch die Modulabdeckung hindurchragt und am Halteteil befestigt ist.

Das Metallemblem klemmt vorzugsweise den Zentrumsabschnitt zwischen der Modulabdeckung und dem Halteteil.

Vorzugsweise ist das Halteteil ein topfförmiger Diffusor, der mit der Unterseite seines Bodens zur Modulabdeckung weisend über den Gasgenerator gestülpt am Modul befestigt ist, wobei der Zentrumsabschnitt am Boden des Diffusor befestigt ist. Bei der erfindungsgemäßen Einrichtung ist zwischen dem Gasgenerator und dem Gassackgewebe durch das Halteteil eine Beabstandung erreicht, so daß das Gassackgewebe nicht unmittelbar vom Gas angeströmt wird und so niedrigeren Belastungen unterworfen ist. Darüber hinaus wird auch die zur Rückhaltung des Zentrumsabschnitts notwendige Kraft nicht in das Gasgeneratorgehäuse eingeleitet, das ohnehin beim Aufblasen des Gassacks großen Belastungen unterworfen ist. Vielmehr wird die durch die Rückhaltung des Zentrumsabschnitts aufgebrachte Kraft in das Halteteil eingeleitet. Indem der Diffusor topfförmig ausgebildet ist und über den Gasgenerator gestülpt wird, entsteht trotzdem eine kompakte Konstruktion.

Der Zentrumsabschnitt kann nicht nur an einer freien, sondern auch an jeglicher Bewegung beim Entfalten gehindert sein.

Vorzugsweise ist der Diffusor nicht nur radial, sondern auch axial, nämlich im Bereich des Bodens vom Gasgenerator beabstandet, so daß sich zwischen dem Gehäuse des Gasgenerators und dem Diffusor eine Ausgleichskammer für Gas bilden kann.

Gemäß einer anderen Ausgestaltung hat die Modulabdeckung einen Abschnitt, der an dem Zentrumsabschnitt angrenzt. Dieser Abschnitt ist bleibend am Halteteil befestigt, und die Befestigung dieses Abschnitts dient auch der Befestigung des Zentrumsabschnitts.

Vorzugsweise ragen Halteteil und Gasgenerator in das Innere des Gassacks, so daß zwischen dem Modulgehäuse und dem Diffusor ein Ringraum zur Unterbringung des ringförmigen, gefalteten Gassackpakets entsteht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Querschnittsansicht durch eine erfindungsgemäße Gassack-Rückhalteeinrichtung mit aufgeblasenem Gassack,
Fig. 2 eine Schnittansicht durch eine Modulabdeckung im Bereich des Zentrumsabschnitts, die zu Erläuterungszwecken angeführt ist, und
Fig. 3 eine Schnittansicht durch die erfindungsgemäße Gassack-Rückhalteeinrichtung mit der Modulabdeckung im Bereich des Zentrumsabschnitts in Fig. 1.

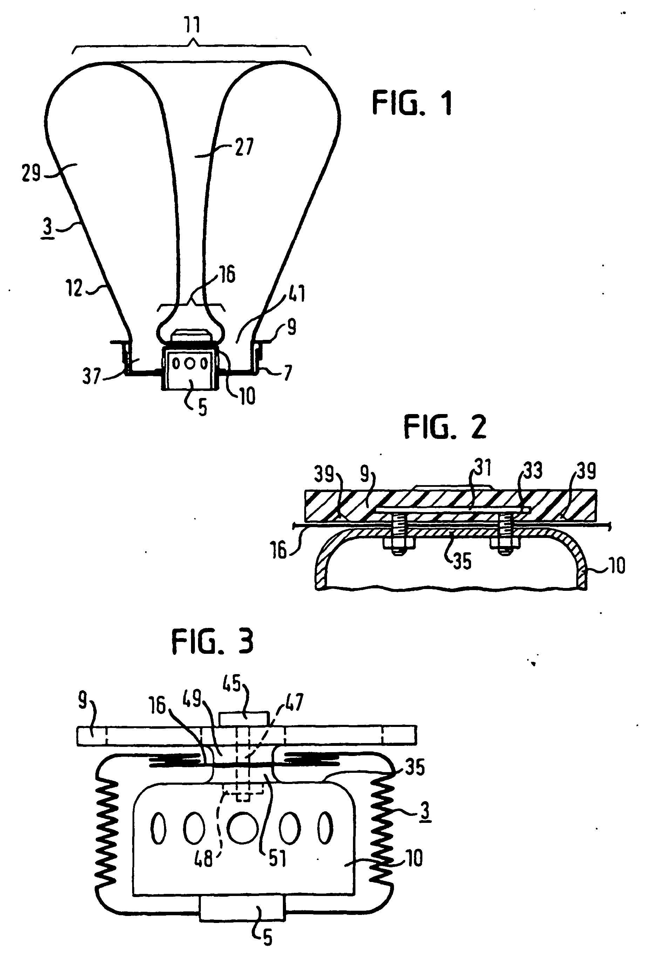

In Fig. 1 ist eine Gassack-Rückhalteeinrichtung mit einem Gassackmodul, das einen im Lenkrad oder im Armaturenbrett untergebrachten Gassack 3, einen Gasgenerator 5 und ein Modulgehäuse 7 mit einer Modulabdeckung 9 aufweist, gezeigt. Der Gasgenerator 5 wird von einem Halteteil in Form eines topf- oder glockenförmigen Diffusors 10 umgeben, der von oben, mit der Unterseite des Bodens zur Modulabdeckung 9 weisend, über den Gasgenerator 5 gestülpt ist und am Modul, genauer am Modulgehäuse 7 befestigt ist. Anstatt des Diffusors 10 kann beispielsweise auch ein den Gasgenerator 5 umgebender, starr am Modulgehäuse 7 befestigter Bügel oder ein anderes funktionsgleiches Halteteil vorgesehen sein.

Der Gassack hat mehrere Abschnitte, nämlich eine Vorderwand 11, die dem Insassen im aufgeblasenen Zustand zugewandt ist und auf die dieser im Rückhaltefall prallt. Darüber hinaus ist eine Rückwand 12 vorgesehen. Die Vorderwand hat eine tiefe Einbuchtung 27, die dadurch gebildet ist, daß ein mittlerer Abschnitt der Vorderwand 11, im folgenden Zentrumsabschnitt 16 genannt, an jeglicher Bewegung aus dem Modul heraus im Rückhaltefall gehindert wird. Dadurch entsteht eine ringförmige aufzublasende Kammer 29. Die Modulabdeckung 9 weist einen Abschnitt auf, der an den Zentrumsabschnitt 16 angrenzt und bleibend am Diffusor 10 befestigt ist.

In Figur 2 ist allein zu Erläuterungszwecken ein Schnitt durch die Modulabdeckung 9 im Bereich des Zentrumsabschnitts 16 gezeigt. Die Modulabdeckung 9 weist einen Abschnitt auf, der an den Zentrumsabschnitt 16 angrenzt und bleibend am Diffusor 10 befestigt ist.

Zur Befestigung dieses Abschnitts der Modulabdeckung 9 ist in ihrem Inneren ein Verstärkungsblech 31 integriert, von dem Gewindebolzen 33 abstehen, die durch den Zentrumsabschnitt 16 und den Boden 35 des Diffusors 10 ragen, um von unten mit Muttern verschraubt zu werden.

Der Gassack 3 ist im gefalteten Zustand in einem Ringraum 37 zwischen Diffusor 10 und Außenwand des Modulgehäuses 7 untergebracht.

Beim Aufblasen des Gassacks strömt zuerst Gas aus dem Gasgenerator 5 in eine Ausgleichskammer zwischen dem Gasgeneratorgehäuse (gezeigt) und den Diffusor 10, denn der Diffusor 10 ist vom Gasgeneratorgehäuse sowohl radial als auch zwischen Boden und oberer Stirnwand des Generatorgehäuses beabstandet. Von der Ausgleichskammer gelangt das Gas in den gefalteten Bereich des Gassacks 3 und bläst diesen auf. Der Gassack 3 reißt die Abdeckung 9 im Bereich einer ringförmigen Schwächungslinie 39 auf, so daß eine ringförmige Austrittsöffnung 41 entsteht, über die der Gassack sich in Richtung Insassen entfaltet.

Bei der Ausführungsform nach den Fig. 1 und 2 ist der Zentrumsabschnitt 16 zwischen der Unterseite der Modulabdeckung 9 und dem Boden 35 geklemmt und damit bleibend am Diffusor befestigt. Dabei ist Fig. 2 allein zu Erläuterungszwecken angeführt und nicht Teil der vorliegenden Erfindung.

Bei der erfindungsgemäßen Ausführungsform nach Fig. 3 ist ein von außen sichtbares, auf die Abdeckung 9 aufgesetztes Emblem 45 aus Blech mit einem Gewindestift 47 vorgesehen, der durch die Abdeckung 9 und den Boden 35 des Diffusors 10 ragt um von unten verschraubt zu werden. Über die Befestigung des Emblems 45 erfolgt auch die Klemmung und Befestigung des an den Zentrumsabschnitt 16 angrenzenden Teiles der Modulabdeckung 9 und des Zentrumsabschnitts 16. Eine entsprechende Mutter ist mit 47 bezeichnet. Die Unterseite der Modulabdeckung 9 und die Unterseite des Bodens 33 weisen jeweils einander zugewandte Fortsätze 49 bzw. 51 auf.

Bei dieser Ausführungsform und bei des zu Erläuterungszwecken angeführten Fig.2 ragen im übrigen Diffusor 10 und Gasgenerator 5 in das Innere des Gassacks 3.

Anstatt des Verstärkungsblechs 31 samt Gewindebolzen 33 und des Gewindestifts 47 können von der Modulabdeckung 9 rückseitige einstückig angeformte Fortsätze, z.B. in Stiftform, abstehen, die sich durch die Öffnungen im Diffusor 10 erstrecken und z.B. am freien Ende thermisch umgeformt werden, um bleibend am Diffusor 10 befestigt zu sein.

Anstatt der Gewindebolzen 33 und des Gewindestifts 47 können auch Bolzen oder Laschen vorstehen, die am freien Ende umgeformt werden.

## Patentansprüche

1. Gassack-Rückhalteeinrichtung, mit einem Gassackmodul, das einen Gasgenerator (5) und einen Gassack (3) mit einer Vorderwand (11) aufweist, auf die der zurückzuhaltende Insasse im Rückhaltefall prallen kann und die eine Einbuchtung (27) aufweist, indem ein Zentrumsabschnitt (16) der Vorderwand (11) am Modul bleibend befestigt ist und beim Aufblasen des Gassacks (3) an einer freien Bewegung gehindert wird, und mit einer eine Austrittsöffnung (41) schließenden Modulabdeckung (9), wobei ein den Gasgenerator (5) umgebendes, am Modul befestigtes Halteteil vorgesehen ist, an dem der Zentrumsabschnitt (16) befestigt ist, **dadurch gekennzeichnet, daß** der Zentrumsabschnitt (16) durch eine Befestigung eines von außerhalb der Modulabdeckung (9) sichtbaren Metallemblems (45) am Halteteil befestigt ist.

2. Gassack-Rückhalteeinrichtung nach Anspruch 1, **dadurch gekennzeichnet, daß** das Metallemblem (45) einen Gewindestift (47) aufweist, der durch die Modulabdeckung (9) hindurchragt und am Halteteil befestigt ist.

3. Gassack-Rückhalteeinrichtung nach Anspruch 1 oder 2, **dadurch gekennzeichnet, daß** das Metallemblem (45) den Zentrumsabschnitt (16) zwischen der Modulabdeckung (9) und dem Halteteil klemmt.

4. Gassack-Rückhalteeinrichtung nach Anspruch 1 bis 3, **dadurch gekennzeichnet, daß** das Halteteil ein topfförmiger Diffusor (10) ist, der mit der Unterseite seines Bodens (35) zur Modulabdeckung (9) weisend über den Gasgenerator (5) gestülpt und der Zentrumsabschnitt (16) am Boden (35) des Diffusors (10) befestigt ist.

5. Gassack-Rückhalteeinrichtung nach Anspruch 4, **dadurch gekennzeichnet, daß** der Diffusor (10) radial und im Bereich des Bodens vom Gasgenerator (5) beabstandet ist.

6. Gassack-Rückhalteeinrichtung nach einem vorhergehenden Ansprüche, **dadurch gekennzeichnet, daß** der Abschnitt der Modulabdeckung (9), der an den Zentrumsabschnitt (16) angrenzt, am Halteteil bleibend befestigt ist und die Befestigung dieses Abschnitts auch der Befestigung des Zentrumsabschnitts (16) dient.

7. Gassack-Rückhalteeinrichtung nach einem der vorhergehenden Ansprüche, **dadurch gekennzeichnet, daß** Halteteil samt Gasgenerator (5) in das Innere des Gassacks (3) ragen.

## Claims

1. A gas bag restraint device, comprising a gas bag module which has a gas generator (5) and a gas bag (3) with a front wall (11) onto which the occupant to be restrained can strike in a case of restraint and which has an indentation (27) formed in that a center section (16) of the front wall (11) is permanently fastened to the module and is prevented from moving freely when the gas bag (3) is inflated, and further comprising a module covering (9) closing an outlet opening (41), a holding part being provided which surrounds the gas generator (5) and is fastened to the module, the center section (16) being fastened to the holding part, **characterized in that** the center section (16) is fastened to the holding part by a fastening of a metal emblem (45) visible from outside the module covering (9).

2. The gas bag restraint device according to Claim 1, **characterized in that** the metal emblem (45) has a threaded pin (47) which projects through the module covering (9) and is fastened to the holding part.

3. The gas bag restraint device according to Claim 1 or 2, **characterized in that** the metal emblem (45) clamps the center section (16) between the module covering (9) and the holding part.

4. The gas bag restraint device according to Claims 1 to 3, **characterized in that** the holding part is a cup-shaped diffusor (10) which, with the underside of its base (35) pointing to the module covering (9), is turned over the gas generator (5) and the center section (16) is fastened to the base (35) of the diffusor (10).

5. The gas bag restraint device according to Claim 4, **characterized in that** the diffusor (10) is spaced apart from the gas generator (5) radially and in the region of the base.

6. The gas bag restraint device according to any of the preceding claims, **characterized in that** the section of the module covering (9) which adjoins the center section (16) is permanently fastened to the holding part and the fastening of this section also serves for fastening the center section (16).

7. The gas bag restraint device according to any of the preceding claims, **characterized in that** the holding part together with the gas generator (5) project into the interior of the gas bag (3).

## Revendications

1. Système de retenue à coussin à gaz, comportant un module de coussin à gaz qui présente un générateur de gaz (5) et un coussin à gaz (3) avec une paroi antérieure (11) sur laquelle le passager à retenir peut heurter en cas de retenue et qui présente un creux (27) par le fait qu'un tronçon central (16) de la paroi antérieure (11) est fixé à demeure sur le module et est empêché de se mouvoir librement lors du gonflage du coussin à gaz (3), et comportant un couvercle de module (9) obturant un orifice de sortie (41), une partie de retenue étant prévue fixée sur le module et entourant le générateur de gaz (5), sur laquelle est fixé le tronçon central (16), **caractérisé en ce que** le tronçon central (16) est fixé sur la partie de retenue par une fixation d'un emblème métallique (45) visible depuis l'extérieur du couvercle de module (9).

2. Système de retenue à coussin à gaz selon la revendication 1, **caractérisé en ce que** l'emblème métallique (45) présente une tige filetée (47) qui fait saillie à travers le couvercle de module (9) et qui est fixée sur la partie de retenue.

3. Système de retenue à coussin à gaz selon l'une des revendications 1 ou 2, **caractérisé en ce que** l'emblème métallique (45) serre le tronçon central (16) entre le couvercle de module (9) et la partie de retenue.

4. Système de retenue à coussin à gaz selon l'une des revendications 1 à 3, **caractérisé en ce que** la partie de retenue est un diffuseur (10) en forme de pot qui, avec la face inférieure de son fond (35) tournée vers le couvercle de module (9), est retourné sur le générateur de gaz (5), et le tronçon central (16) est fixé sur le fond (35) du diffuseur (10).

5. Système de retenue à coussin à gaz selon la revendication 4, **caractérisé en ce que** le diffuseur (10) est espacé du générateur de gaz (5) radialement et dans la région du fond.

6. Système de retenue à coussin à gaz selon l'une des revendications précédentes, **caractérisé en ce que** le tronçon du couvercle de module (9), qui est adjacent au tronçon central (16), est fixé à demeure sur la partie de retenue et la fixation de ce tronçon sert aussi à la fixation du tronçon central (16).

7. Système de retenue à coussin à gaz selon l'une des revendications précédentes, **caractérisé en ce que** la partie de retenue fait saillie conjointement avec le générateur de gaz (5) dans l'intérieur du coussin à gaz (3).
